# FASCICULE DE BREVET EUROPEEN

(11) **EP 2 721 746 B1**
(45) Date de publication et mention de la délivrance du brevet: **12.08.2015**
(21) Numéro de dépôt: 12725029.8
(22) Date de dépôt: 01.06.2012
(51) Int. Cl.: H04B 7/185, H04B 7/195

(54) **SYSTÈME DE COMMUNICATION PAR SATELLITE, UN SATELLITE LEO RELAYANT DES COMMUNICATIONS ENTRE UN SATELLITE GEO ET DES STATIONS TERRESTRES, LES LIAISONS MONTANTES ET DESCENDANTES UTILISANT LA MÊME BANDE DE FRÉQUENCES ET LE MULTIPLEXAGE TEMPOREL.**
SATELLITENKOMMUNIKATIONSANORDNUNG MIT EINEM LEO SATELLITEN ZUR WIEDERHOLLUNG VON KOMMUNIKATIONEN ZWISCHEN EINEM GEO SATELLITEN UND IRDISCHE STATIONEN, MIT AUFWEG UND ABWEG DIE DAS GLEICHE FREQUENZBAND BENUTZEN UND ZEITVERSCHATELUNG.
SATELLITE COMMUNICATION SYSTEM WITH A LEO SATELLITE RELAYING COMMUNICATIONS BETWEEN A GEO SATELLITE AND EARTH STATIONS, THE UPLINK AND DOWNLINK USING THE SAME FREQUENCY BAND AND TIME MULTIPLEXING.

(30) Priorité: 16.06.2011 FR 1101850
(43) Date de publication de la demande: 23.04.2014
(73) Titulaire: Airbus Defence and Space SAS, 78130 Les Mureaux (FR)
(72) Inventeur: TRONC, Jérôme, F-31240 Saint Jean (FR); DUNAT, Jean-Christophe, F-31000 Toulouse (FR)
(74) Mandataire: Ribeiro Dias, Alexandre
(86) Numéro de dépôt international: PCT/EP2012/060359
(87) Numéro de publication internationale: WO 2012/171809

(56) Documents cités:
- US-A- 5 949 766
- US-A- 6 023 605
- US-A1- 2002 077 099
- US-A1- 2002 132 578

## Description

### Domaine de l'invention

L'invention relève du domaine des systèmes de transmission de données à grande distance. Elle concerne plus particulièrement les systèmes et procédés de communications de données (transfert de données, télécommande, suivi de terminaux...) entre des utilisateurs dotés de petits terminaux mobiles.

### Contexte de l'invention et problème posé

La question de la transmission de données à grande distance depuis ou vers un terminal mobile, se pose en particulier pour les liaisons entre ordinateurs (« machine to machine» ou M2M). Ce domaine de transmission est alors caractérisé par un besoin de débit de données nettement plus faible que pour des liaisons de type image ou Internet, et/ou par la capacité à utiliser une liaison intermittente plutôt que continue.

On connait une première approche de ce problème, suivie par des systèmes existants de transmission de données tels qu'Orbcomm et Argos, lesquelles utilisent des constellations de satellites en orbite basse (LEO de l'anglais « Low Earth Orbit »). Dans cette approche, le mode normal de fonctionnement de chaque satellite en orbite basse LEO requiert qu'il soit, d'une part en visibilité simultanée d'une station sol de contrôle et de connexion, et d'autre part d'un terminal utilisateur.

Le satellite sert alors de lien de communication entre les deux parties, et le temps de latence des accusés de réception et des messages est fonction de la distance entre le satellite et la station sol (GES de l'anglais « Gateway Earth Station »).

Cependant, la couverture fournie par le réseau de stations sol des systèmes utilisant des satellites en orbite basse, tels qu'Orbcomm et Argos, est limitée par le déploiement de stations sols (GES) et les systèmes existants fournissent seulement une couverture limitée de la Terre dans ce mode. Chaque station sol permet en effet une couverture sur un rayon d'environ 3000 km, et chacun de ces systèmes comporte une vingtaine de stations sol.

On constate alors aisément que les zones de couvertures présentent de larges zones « blanches » pour lesquelles le système n'est pas utilisable. Ces zones couvrent en particulier une large part des zones océaniques, voire une partie significative de zones continentales telles que l'Afrique ou l'Australie.

Dans les cas pour lesquels le satellite LEO n'a pas de visibilité simultanée du terminal utilisateur et de la station de contrôle sol (GES), il est nécessaire d'utiliser une méthode de communication de type stockage et envoi (méthode connue de l'homme de l'art sous le nom « store & forward »). Dans cette méthode, le message est stocké à bord du satellite, qui continue son déplacement sur son orbite jusqu'à ce qu'il survole la station sol GES à laquelle il délivre le message stocké.

Avec cette méthode d'opération, les délais de communications sont longs et rendent difficiles des communications bidirectionnelles dans des conditions acceptables, étant donné que les délais sont typiquement compris entre quelques minutes et les 100 à 150 minutes de durée d'une orbite complète du satellite LEO.

On connait par ailleurs des exemples de systèmes de télécommunications hybrides pour la transmission de données entres utilisateurs. Ces systèmes hybrides sont composés de satellites géostationnaires et d'une constellation de satellite en orbite basse.

On peut citer notamment un premier document de brevet US 6208625.

Ce document décrit un réseau formé de satellites LEO et géostationnaires (GEO) capables de communiquer entre eux. Au sol, des terminaux utilisateurs sont capables de réception / transmission (Rx/Tx) avec les satellites LEO et GEO. La composante LEO réalise un filtrage du trafic reçu depuis les terminaux, et en fonction de l'aspect urgent du trafic reçu, elle aiguille ce trafic soit en interne vers le LEO soit vers le GEO.

Dans un second document de brevet EP 0883252, il est proposé un système de communication par satellite permettant une couverture globale, une réduction du délai de transmission (Tx), et une maximisation de l'utilisation de la capacité du système (communication satellite large bande par l'interconnexion de plusieurs constellations en orbite moyenne - MEO - et géostationnaire - GEO -).

Voir également US-A-2002/0132578 (Wiedeman).

Les satellites MEO et GEO communiquent directement entre eux par des liens inter-satellites, ce qui permet un routage du trafic (pour la voix et pour les données) à bord des satellites en fonction de certaines règles.

En outre, ce document propose un partage et une réutilisation du spectre entre les satellites GEO et MEO à très hautes fréquences (par exemple entre 40 et 60 GHz), afin de permettre la fonction connue sous le nom de « seamless handover » pour les terminaux portables (passage d'un réseau mobile à un réseau fixe sans interruption de communication en cours).

Il est clair que les systèmes hybrides actuels présentent une grande complexité, synonyme de coût élevé de mise en place et d'utilisation.

### Objectifs de l'invention

Un objectif de l'invention est de fournir une solution basée sur des satellites répéteurs les plus simples possibles, offrant.de bonnes performances (bilan de liaison, disponibilité) au sein de la couverture de chaque satellite.

### Exposé de l'invention

Selon un premier aspect, la présente invention concerne une charge utile de satellite répéteur d'un système de télécommunications, ledit satellite répéteur étant destiné à être placé en orbite défilante au-dessus de la surface d'un corps céleste, et la charge utile étant configurée pour répéter des données reçues d'un satellite stationnaire au-dessus de la surface du corps céleste vers un terminal sensiblement à la surface du corps céleste, et pour répéter des données reçues du terminal vers le satellite stationnaire. Ladite charge utile est en outre configurée pour :
- utiliser une même bande de fréquence pour la répétition de données vers le satellite stationnaire, dite « émission montante », et pour la répétition de données vers le terminal, dite « émission descendante », et
- multiplexer dans le temps les émissions montantes et les émissions descendantes.

De telles dispositions permettent un meilleur partage de la puissance embarquée à bord du satellite répéteur. En outre, de telles dispositions permettent d'optimiser l'architecture de la charge utile pour en réduire le coût de fabrication, l'encombrement et/ou la masse au lancement.

Il est à noter qu'on entend par terminal « sensiblement à la surface du corps céleste », notamment les terminaux d'utilisateurs terrestres, maritimes ou aéronautiques. De même, lesdits terminaux sont admis être par exemple placés dans des moyens terrestres, maritimes ou aéronautiques.

On donne ci-après des modes particuliers de réalisation de la charge utile de satellite répéteur. L'invention vise également toutes les combinaisons techniquement possibles de ces modes particuliers de réalisation.

Selon un mode particulier de réalisation, la charge utile comporte au moins un amplificateur de puissance, et ladite charge utile est configurée pour utiliser ledit amplificateur de puissance à la fois pour des émissions montantes et pour des émissions descendantes.

Selon un mode particulier de réalisation, la charge utile comporte :
- au moins une antenne d'émission montante,
- au moins une antenne d'émission descendante,
- des moyens de router un signal en sortie de l'amplificateur de puissance, représentatif de données à répéter, soit vers ladite antenne d'émission montante soit vers ladite antenne d'émission descendante.

Selon un mode particulier de réalisation, la charge utile comporte des moyens de multiplexer, en entrée de l'amplificateur de puissance, des signaux d'émissions montantes et des signaux d'émissions descendantes.

Selon un mode particulier de réalisation, la charge utile comporte :
- plusieurs antennes d'émission descendante,
- des moyens de router un signal en sortie de l'amplificateur de puissance, représentatif de données à répéter, vers l'une quelconque desdites antennes d'émission descendante.

Selon un mode particulier de réalisation, la charge utile est configurée pour utiliser la même bande de fréquence, utilisée pour les émissions montantes et les émissions descendantes, pour la réception de données à répéter du terminal, dite « réception montante », et pour la réception de données à répéter du satellite stationnaire, dite « réception descendante ».

Selon un mode particulier de réalisation, la charge utile comporte plusieurs antennes de réception montante, et ladite charge utile est configurée pour recevoir simultanément sur chacune desdites antennes de réception montante.

Selon un mode particulier de réalisation, la charge utile est configurée pour multiplexer dans le temps les émissions montantes et les réceptions montantes, et/ou pour multiplexer dans le temps les émissions descendantes et les réceptions descendantes.

Selon un mode particulier de réalisation, la charge utile est configurée pour utiliser une même première sous-bande de fréquence de la bande de fréquence pour les réceptions montantes et les émissions montantes, et utiliser une même seconde sous-bande de fréquence de la bande de fréquence pour les réceptions descendantes et les émissions descendantes.

Selon un mode particulier de réalisation, la charge utile est configurée pour effectuer les réceptions montantes simultanément aux émissions descendantes, et pour effectuer les réceptions descendantes simultanément aux émissions montantes.

Selon un second aspect, la présente invention concerne un système de télécommunications, destiné au transfert de données entre au moins un terminal, situé sensiblement à la surface d'un corps céleste, et au moins un satellite stationnaire au dessus de la surface du corps céleste. Le système comporte un ou plusieurs satellites répéteurs de signaux, lesdits satellites répéteurs défilant au-dessus de la surface du corps céleste et comportant une charge utile conforme à l'invention.

On donne ci-après des modes particuliers de réalisation du système de télécommunications. L'invention vise également toutes les combinaisons techniquement possibles de ces modes particuliers de réalisation.

Selon un mode particulier de réalisation, on utilise la même bande de fréquence pour les communications entre les terminaux et la constellation de satellites répéteurs que pour les communications entre le satellite stationnaire et le satellite répéteur. De préférence, lorsque le terminal est dans la zone de couverture du satellite stationnaire, on utilise également la même bande de fréquence pour les communications directes entre les terminaux et le satellite stationnaire.

Ceci procure un avantage significatif par rapport aux solutions de l'art antérieur. La bande de fréquence utilisée par le système peut se situer dans n'importe laquelle des bandes allouées aux services de télécommunications par satellites (des bandes basses par exemple UHF ou VHF, jusqu'aux hautes fréquences telles que les bandes Ka ou Q). Préférentiellement, la bande de fréquences utilisée est la bande L (entre 0.9 et 2.0 GHz) qui est plus particulièrement appropriée aux communications mobiles par satellites.

Selon un mode particulier de réalisation, le système comporte au moins une station sol de connexion des satellites stationnaires. Les communications entre le sol et les satellites répéteurs sont assurés par l'intermédiaire des satellites stationnaires et des stations de connexion de ces satellites stationnaires. Ces communications comprennent à la fois les échanges de données entre utilisateurs et potentiellement les communications de télécommande et de télémesure des moyens de répétition spatiaux. Ce mode de réalisation ne nécessite donc pas l'utilisation de station sol de connexion affectée aux satellites répéteurs.

Selon un mode particulier de réalisation, au moins un satellite répéteur est placé en orbite polaire ou quasi-polaire (inclinaison de l'orbite supérieure à 70°) autour du corps céleste.

Selon un mode particulier de réalisation :
- au moins un satellite répéteur comporte des moyens d'effectuer une amplification sans translation de fréquence du signal reçu du satellite stationnaire,
- l'interface air utilisée est une interface de type CDMA (de l'anglais « Code Division Multiple Access) »,
- et au moins un terminal comporte des moyens de gérer l'arrivée de deux signaux comportant des différences de délai et de Doppler.

Dans ce cas, préférentiellement, les moyens de gérer l'arrivée de deux signaux comportant des différences de délai et de Doppler, du terminal sont un récepteur de type « Rake », bien connu de l'homme de l'art.

Selon un mode particulier de réalisation :
- l'interface air est de type TDMA,
- le système utilise deux signaux distincts : un pour les satellites stationnaires et un pour les satellites répéteurs,
- un multiplexage temporel est utilisé pour répartir la capacité entre les satellites stationnaires et les satellites répéteurs avec des intervalles de garde et une pré-compensation du Doppler au niveau des satellites répéteurs.

Selon un mode particulier de réalisation, au moins un terminal comporte des moyens d'utiliser la diversité spatiale ou des techniques MIMO (Multiple Input Multiple Output) pour recombiner les signaux provenant à la fois d'un satellite stationnaire et d'un satellite répéteur.

Selon un mode particulier de réalisation :
- au moins un satellite répéteur relaie le signal, de manière transparente ou régénérative, sans translation de fréquence du signal reçu, et
- l'interface air comporte des moyens de limiter les interférences au niveau d'un terminal, entre les signaux provenant d'un satellite stationnaire et les signaux relayés par un satellite répéteur.

Selon un mode particulier de réalisation :
- au moins un satellite répéteur relaie le signal, de manière transparente ou régénérative, dans un canal adjacent, avant sa réémission, et
- le système de télécommunications comporte une entité de coordination pour coordonner les plans de fréquences entre les satellites stationnaires et les satellites répéteurs.

Selon un troisième aspect, la présente invention concerne un procédé de télécommunications, destiné au transfert de données entre un terminal, situé sensiblement à la surface d'un corps céleste, et un satellite stationnaire au-dessus de la surface du corps céleste, le transfert de données entre ledit terminal et ledit satellite stationnaire s'effectuant par l'intermédiaire d'un satellite répéteur configuré pour répéter des données reçues dudit satellite stationnaire vers ledit terminal et pour répéter des données reçues dudit terminal vers ledit satellite stationnaire. En outre :
- le satellite répéteur utilise une même bande de fréquence pour la répétition de données vers le satellite stationnaire, dite « émission montante », et pour la répétition de données vers le terminal, dite « émission descendante »,
- le satellite répéteur multiplexe dans le temps les émissions montantes et les émissions descendantes.

On donne ci-après des modes particuliers de mise en oeuvre du procédé de télécommunications. L'invention vise également toutes les combinaisons techniquement possibles de ces modes particuliers de mise en oeuvre.

Selon un mode particulier de mise en oeuvre, le satellite répéteur utilise un même amplificateur de puissance à la fois pour les émissions montantes et les émissions descendantes.

Selon un mode particulier de mise en oeuvre, le satellite répéteur utilise la même bande de fréquence, utilisée pour les émissions montantes et les émissions descendantes, pour la réception de données à répéter du terminal, dite « réception montante », et pour la réception de données à répéter du satellite stationnaire, dite « réception descendante ».

Selon un mode particulier de mise en oeuvre, le satellite répéteur multiplexe dans le temps les émissions montantes et les réceptions montantes, et/ou ledit satellite répéteur multiplexe dans le temps les émissions descendantes et les réceptions descendantes.

Selon un mode particulier de mise en oeuvre, le satellite répéteur effectue simultanément les émissions descendantes et les réceptions montantes, et effectue simultanément les émissions montantes et les réceptions descendantes.

Selon un mode particulier de mise en oeuvre, le satellite répéteur utilise une même première sous-bande de fréquence de la bande de fréquence pour les réceptions montantes et les émissions montantes, et utilise une même seconde sous-bande de fréquence de la bande de fréquence pour les réceptions descendantes et les émissions descendantes.

### Brève description des figures

Les buts et avantages de l'invention seront mieux compris à la lecture de la description et des figures de modes particuliers de réalisation, donnés à titre d'exemples non limitatifs, et pour lequel les figures représentent :
- Figure 1 : l'architecture générale du système,
- Figure 2 : illustration des positions de satellites défilants LEO et stationnaires GEO sur un planisphère, à un instant donné,
- Figure 3 : un tableau des ordres de grandeur de délais entre les signaux d'un satellite stationnaire GEO et d'un satellite défilant LEO pour différentes altitudes d'orbites LEO,
- Figure 4 : les zones de couverture des satellites défilants LEO et stationnaires GEO de la constellation décrite,
- Figure 5 : un exemple d'utilisation d'une bande de fréquence dans un système selon l'invention,
- Figure 6 : une représentation schématique d'une charge utile d'un satellite défilant LEO selon un mode préféré de réalisation,
- Figure 7a et 7b : des exemples de multiplexage temporel de communications entre un terminal utilisateur, un satellite défilant LEO et un satellite stationnaire GEO,
- Figure 8 : une représentation schématique d'une charge utile selon une variante du mode de réalisation de la figure 6,

Dans ces figures, des références identiques désignent des éléments identiques ou analogues.

### Description détaillée de modes de réalisation de l'invention

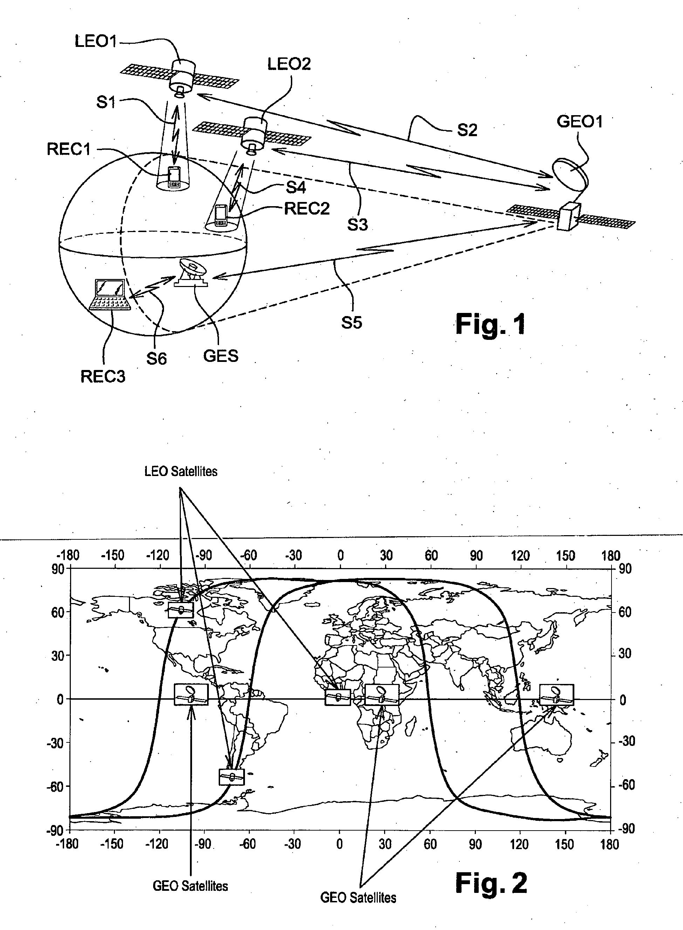

L'architecture d'un système de télécommunications selon l'invention est illustrée par les figures 1 et 2. Comme on le voit sur ces figures, le système proposé utilise deux constellations de satellites.

La première constellation est composée d'un ou plusieurs satellites stationnaires (également appelés GEO dans la suite de la description).

Dans le cas présent, le système décrit ici à titre d'exemple nullement limitatif, est basé sur une constellation de trois satellites stationnaires GEO1, GEO2, GEO3 placés en orbite géostationnaire au dessus des trois zones continentales principales (par exemple aux longitudes 265°E, 25°E, 145°E respectivement, tel qu'illustré figure 2). Les satellites stationnaires GEO1, GEO2, GEO3 opèrent dans la bande dite MSS L (1.5/1.7 GHz).

La constellation des satellites stationnaires GEO1, GEO2, GEO3 est contrôlée par une ou plusieurs stations de contrôle terrestres, disposées en vue des satellites stationnaires GEO1, GEO2, GEO3 qu'elles contrôlent, lesquelles effectuent les fonctions de contrôle et télécommande. La constellation des satellites stationnaires GEO1, GEO2, GEO3 est connectée aux réseaux de télécommunication terrestre par une ou plusieurs stations de connexion terrestres GES, disposées en vue des satellites stationnaires GEO1, GEO2, GEO3 via un lien FL (de l'anglais « Feeder Link »), de façon connue en soi.

Le système est complété par une seconde constellation de trois satellites défilants en orbite basse ou moyenne (également appelés satellites LEO ou satellites MEO), avec des orbites d'altitudes comprises typiquement entre 400 et 20000 km, agissant comme satellites répéteurs. Il est clair que le système peut utiliser un nombre plus grand ou plus faible de satellites dans chacune des constellations de satellites défilants LEO et stationnaires GEÔ, la différence étant une couverture de la Terre plus ou moins complète.

Dans l'exemple décrit ici, les satellites défilants sont supposés de type évoluant en orbite basse (dite LEO), et placés en orbite héliosynchrone à une altitude de 567 km avec une inclinaison de 97.7° dans trois plans orbitaux différents (avec des ascensions droites du noeud ascendant à 0°, 60° et 120°). On rappelle que l'orbite héliosynchrone est définie par le fait que chaque satellite défilant repasse, après plusieurs orbites, en vue d'un même point de la Terre à la même heure solaire locale. Le présent système utilise trois satellites en orbite basse : LEO1, LEO2, LEO3, dont les traces des orbites sont illustrées sur la figure 2 à titre d'exemple nullement limitatif.

Dans cet exemple, ces trois satellites défilants en orbite basse LEO1, LEO2, LEO3, pourraient être des charges utiles embarquées en « passager » sur des satellites dont la charge utile principale est dédiée à une autre mission telle que, par exemple, l'observation de la Terre.

Il est clair que la constellation de satellites défilants LEO1, LEO2, LEO3, peut comprendre des satellites évoluant sur des orbites d'altitudes ou d'inclinaisons différentes.

Ces satellites défilants LEO1, LEO2, LEO3, opèrent dans la même bande de fréquences que les satellites stationnaires GEO1, GEO2, GEO3, et dans le cas présent, dans la bande MSS L (1.5/1.7 GHz).

Le système de télécommunications s'adresse à tout utilisateur, notamment mobile à la surface de la Terre, et doté d'un terminal d'émission/réception (également appelé terminal REC).

Dans l'exemple illustré par la figure 1, le système s'adresse notamment à un utilisateur équipé d'un terminal d'émission/réception REC1, émettant ou recevant des données de ou vers un autre utilisateur, éventuellement lui-même doté d'un terminal d'émission/réception REC2, et également éventuellement mobile à la surface de la Terre. L'utilisateur REC3 peut également être connecté à un réseau terrestre (IP, PSTN, ...) et être connecté à l'utilisateur REC1 via la GES.

Chaque terminal utilisateur REC1 et REC2, est un terminal transportable, comportant notamment une interface utilisateur, par exemple de type clavier, écran tactile ou liaison de données vers un équipement électronique, une batterie et/ou des moyens d'alimentation, un processeur et/ou une électronique de contrôle, des moyens de mémorisation de programmes ou de données, et des moyens d'émission et de réception de signaux, fonctionnant dans la bande de fréquence MSS L, dans le présent exemple décrit ici à titre nullement limitatif.

Chaque terminal utilisateur REC1 et REC2, est doté dans le présent exemple d'une antenne omnidirectionnelle, adaptée à recevoir des signaux émanant indifféremment d'un quelconque des satellites défilants LEO1, LEO2, LEO3 en orbite basse, ou d'un quelconque des satellites stationnaires GEO1, GEO2, GEO3 en orbite géostationnaire.

Dans la mise en oeuvre décrite ici, chaque terminal utilisateur REC1 et REC2, comporte pour la voie aller un récepteur de type « Rake », bien connu de l'homme de l'art. On rappelle qu'un récepteur Rake est un récepteur radio, conçu originellement pour compenser l'atténuation due aux trajets multiples d'ondes radio pour les systèmes terrestres. Il est basé sur le concept que les signaux réfléchis peuvent être distingués (typiquement dans le cas d'une utilisation d'une technique de multiplexage CDMA) et ainsi peuvent être combinés de façon adaptée en tirant alors avantage des multiples propagations. Pour la voie retour, les satellites stationnaires GEO sont supposés transparents et le récepteur Rake est positionné au niveau des GES (stations de connexion des satellites GEO).

Il est cependant à noter que, dans le cas où les satellites stationnaires GEO seraient de type régénératifs, il serait nécessaire qu'ils embarquent un récepteur Rake (en remplacement du récepteur placé au niveau de la GES).

Une communication entre deux terminaux utilisateurs REC1, REC2, supposés en vue de deux satellites défilants LEO1, LEO2 respectivement, et d'un même satellite stationnaire GEO1, comporte plusieurs étapes, ainsi que schématisé sur la figure 1 :
- le premier terminal utilisateur REC1 émet un premier signal S1 vers le premier satellite défilant LEO1 en orbite basse,
- le satellite défilant LEO1, reçoit et amplifie le signal S1 émis par le terminal utilisateur REC1 au sol et le transmet sous forme de signal S2 vers le satellite stationnaire GEO1 en orbite géostationnaire,
- le satellite stationnaire GEO1 reçoit le signal S2 et, si les conditions le permettent, le signal S1, et les retransmet sous forme de signal S3 vers le second satellite défilant LEO2 en orbite basse, soit directement (avec un routage à bord du satellite) soit par l'intermédiaire de la station de connexion GES. Les signaux S1 et S2 sont traités au moyen d'un récepteur Rake soit à bord (dans l'hypothèse d'un routage bord) soit au niveau de la station GES (cette solution est préférée pour des raisons de simplification de l'implémentation).
- le satellite défilant LEO2, reçoit et amplifie le signal S3 émis par le satellite stationnaire GEO1 et le transmet sous forme de signal S4 au terminal utilisateur REC2 au sol.
- le terminal utilisateur REC2 reçoit le signal S4 et potentiellement le signal S3 si les conditions le permettent. Un récepteur Rake permet de recombiner ces deux signaux au niveau du terminal utilisateur.

Dans un cas impliquant des terminaux utilisateurs en vue de deux satellites stationnaires différents GEO1, GEO2, le lien entre les deux terminaux utilisateurs comporte en outre un segment de communication entre ces satellites, par exemple mais de façon non limitative, par l'intermédiaire des stations de connexion GES et de liens sol ou par l'intermédiaire d'un lien direct inter-satellite GEO, s'il existe.

On comprend naturellement qu'il est également envisageable de réaliser une communication d'un utilisateur REC1 disposant d'un terminal émetteur/récepteur mobile, avec un autre utilisateur REC3 connecté au travers d'un réseau de télécommunications terrestre « classique » (PSTN, IP, ...) via la station de connexion GES.

Dans ce cas :
- le premier terminal utilisateur REC1 émet un premier signal S1 vers le premier satellite défilant LEO1 en orbite basse,
- le satellite défilant LEO1, reçoit et amplifie le signal S1 émis par le terminal utilisateur REC1 au sol et le transmet sous forme de signal S2 vers le satellite stationnaire GEO1 en orbite géostationnaire,
- le satellite stationnaire GEO1 reçoit le signal S2 et potentiellement le signal S1 et le retransmet sous forme de signal S5 vers la station de connexion GES,
- la station de connexion GES reçoit le signal S5, (en combinant lorsque cela est nécessaire les signaux S1 et S2 contenus dans S5 au moyen d'un récepteur Rake) et le transmet sous forme de signal S6 au terminal utilisateur REC3 au sol via un réseau terrestre classique.

On note que, sur la figure 1, les liens directs entre les terminaux utilisateurs REC1, REC2 et REC3 et le satellite stationnaire GEO1 ne sont pas figurés afin de simplifier la figure.

Différentes approches peuvent être envisagées pour le répéteur spatial embarqué sur un satellite défilant LEO1, LEO2, LEO3.

Soit, préférentiellement, une simple amplification sans translation de fréquence du signal reçu du satellite stationnaire GEO. Cependant, ceci implique l'utilisation d'une interface air capable de supporter l'arrivée de deux signaux comportant quelques différences de délai et de Doppler. C'est par exemple le cas d'une interface air de type CDMA (« Code Division Multiple Access ») associée à un récepteur Rake.

Soit, alternativement, l'utilisation de deux signaux distincts (un pour le satellite stationnaire GEO et un pour le satellite défilant LEO). Il est par exemple possible d'utiliser une interface air de type TDMA (Time Division Multiple Access), connue en soi, en envisageant soit un multiplexage temporel pour répartir la capacité entre les satellites défilant LEO et stationnaire GEO (avec des intervalles de garde et une pré-compensation du Doppler au niveau du satellite défilant LEO). Alternativement ou en complément, il est également possible d'utiliser deux canaux différents de la bande de fréquence (un pour le satellite stationnaire GEO et un pour le satellite défilant LEO).

Dans la mise en oeuvre décrite ici à titre d'exemple, la première approche a été sélectionnée car elle offre une solution simple et efficace.

Elle exploite en effet la diversité des satellites puisque les signaux venant tant des satellites défilant LEO que stationnaire GEO peuvent être combinés dans un récepteur Rake pour obtenir un meilleur rapport signal sur bruit. Cette technique, d'amélioration du rapport signal sur bruit, permet d'obtenir un taux d'erreur de transmission (« bit error rate ») plus bas, une plus faible puissance transmise EIRP (Effective Isotropically Radiated Power), ou une plus grande marge dans le bilan de liaison.

Par ailleurs, pour un terminal utilisateur REC, en vue simultanément d'un satellite défilant LEO et d'un satellite stationnaire GEO, si les conditions de propagation entraînent la perte d'un lien vers l'un des satellites sur lesquels il est connecté (en raison de l'évolution de la géométrie du lien avec le satellite défilant LEO variant en fonction du temps, ou en raison d'obstacles dans la ligne de visée de l'un des deux satellites défilant LEO et stationnaire GEO), l'autre lien peut permettre de maintenir la communication.

Ce concept de simple amplification sans translation de fréquence du signal reçu du satellite stationnaire GEO, peut être mis en oeuvre grâce à la possibilité offerte par le récepteur Rake, inclus dans le terminal utilisateur REC, de combiner différents signaux venant des différents chemins en provenance d'un satellite défilant LEO et d'un satellite stationnaire GEO.

Dans le scénario de communications de données par satellite, qui fait l'objet de la présente mise en oeuvre, la composante multi-trajets est généralement négligeable. Dans ce cas, le récepteur Rake est utilisé simplement pour combiner plusieurs signaux directs en provenance de plusieurs satellites défilants LEO et stationnaires GEO, puisque les différents signaux peuvent être considérés comme des composants de « trajets multiples » fictifs.

Les signaux reçus peuvent alors être combinés dans le terminal utilisateur REC selon trois algorithmes principaux, connus de l'homme de l'art et donc non décrits plus avant ici :
- par une sélection du meilleur signal (connu sous le terme anglais de « selection combining »),
- par une simple combinaison égale des signaux (connu sous le terme anglais de « equal gain combining »), ou
- par une recombinaison pondérée des signaux pour maximiser le rapport signal à bruit total (connu sous le terme anglais de «Maximal Ratio Combining » ou MRC). Cet algorithme est la solution préférée car il est le plus performant en termes de rapport signal à bruit obtenu.

Une des questions essentielles liées à la combinaison de signaux est que chaque voie suivie a une longueur éventuellement très différente en raison de la position relative des éléments : utilisateur - satellite défilant LEO - satellite stationnaire GEO. Afin d'équilibrer la différence de temps de propagation, qui varie également dans le temps, des buffers de données appropriés doivent être prévus au niveau du récepteur Rake. Le dimensionnement de ces buffers dépend de la différence de délai dans le pire cas entre les différents chemins, et du débit maximum de transfert de données utilisé.

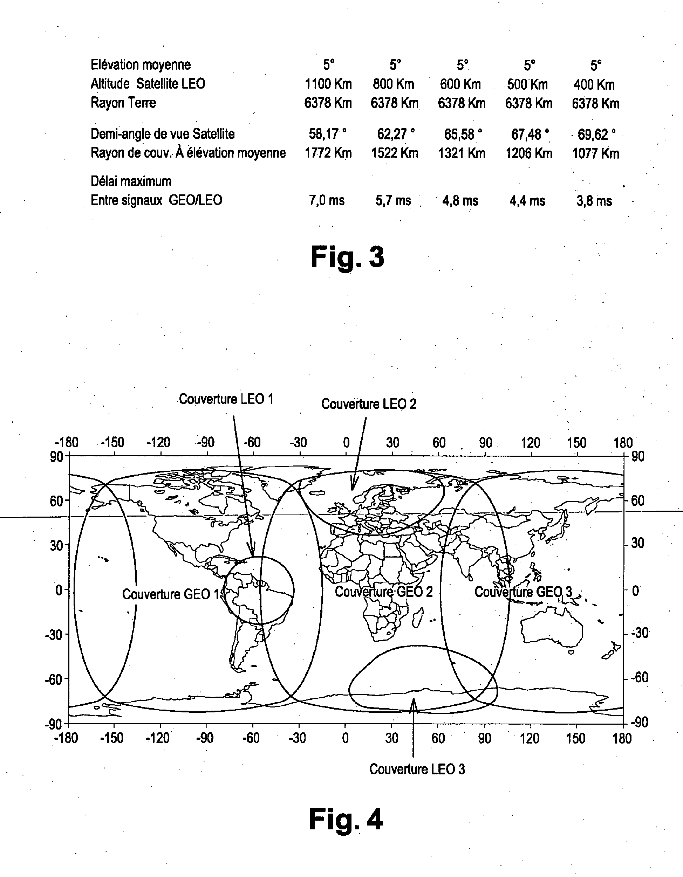

Dans le système proposé, la différence de temps reste inférieure à 5 ms pour la constellation de satellites défilants LEO1, LEO2, LEO3 envisagée. Le tableau de la figure 3 donne quelques ordres de grandeur de délais pour différentes altitudes d'orbites basses par rapport à un satellite stationnaire GEO en orbite géostationnaire.

Il convient également de noter que les services de communication envisagés pour le système selon l'invention, sont préférentiellement des transmissions à faible débit de données. De ce fait, la taille du buffer de données nécessaire reste raisonnable.

Avec cette approche utilisant un récepteur Rake, dans le cas d'une technique de multiplexage CDMA, les satellites défilant LEO et stationnaire GEO partagent bien la même bande de fréquence (bande MSS L dans le présent exemple) sans générer d'interférences dommageables.

La planification des fréquences et les questions de couverture doivent également être prises en considération, puisque les zones de couverture LEO et GEO doivent être coordonnées pour assurer un fonctionnement correct du système. Dans l'approche proposée, la couverture des satellites stationnaires GEO est composée d'un faisceau global couvrant l'intégralité de la surface visible de la Terre. Cette approche permet d'éviter ou de limiter les procédures de transfert pour les satellites défilants LEO (connues par l'homme de l'art sous le terme « hand over ») entre différents faisceaux provenant d'un (ou plusieurs) satellites stationnaires GEO. La couverture LEO est donc incluse dans la couverture du GEO comme l'illustre la figure 4. Les satellites défilants LEO relaient donc simplement les signaux des satellites stationnaires GEO sous lesquels ils sont situés.

Dans l'exemple ci-dessus :
- le satellite défilant LEO1 relaie les signaux de et vers le satellite stationnaire GEO1,
- les satellites défilants LEO2 et LEO3 relaient les signaux de et vers le satellite stationnaire GEO2.

Il n'y a pas de satellite défilant LEO dans la couverture du satellite stationnaire GEO3 à l'instant illustré par la figure 4. En fait, le satellite défilant LEO3 est, à ce moment, connecté au satellite stationnaire GEO2.

Au fur et à mesure qu'un satellite défilant LEO quelconque se déplace dans la zone de couverture des satellites stationnaires GEO, il peut être en visibilité de différents satellites stationnaires GEO. Toutefois, on suppose qu'à un instant donné il est connecté à un satellite géostationnaire unique. Lorsque plusieurs satellites stationnaires GEO sont dans la zone de visibilité des satellites défilants LEO, différentes stratégies peuvent être adoptées pour le choix du satellite stationnaire GEO auquel le satellite défilant LEO doit se raccrocher (par exemple sur un critère du meilleur signal reçu au niveau du satellite défilant LEO, ou un critère géométrique de minimisation de la distance entre satellite défilant LEO et satellite stationnaire GEO qui est prédictible par avance sur la base des éphémérides des satellites). Dans l'exemple ci-dessus le satellite défilant LEO est connecté au satellite stationnaire GEO fournissant le meilleur signal reçu.

Avec ces hypothèses, il n'est pas nécessaire de concevoir de stratégies complexes de planification de fréquences et tous les satellites (les trois satellites stationnaires GEO et les trois satellites défilants LEO) peuvent opérer par exemple sur un unique canal de la bande de fréquence utilisée, avec un multiplexage du type CDMA.

Contrairement à l'approche de l'art antérieur de type Orbcomm ou Argos, le système proposé est en mesure de fournir des communications de données bidirectionnelles, basées sur le fait que le satellite stationnaire GEO relaie les communications des satellites défilants LEO.

Selon cette approche, dès que le terminal utilisateur REC1, REC2 est dans la zone de couverture d'un satellite défilant LEO1, LEO2, LEO3, il est possible de communiquer de façon bidirectionnelle et en temps réel avec lui. Il n'y a plus d'exigence de visibilité simultanée par le satellite défilant LEO1, LEO2, LEO3, du terminal utilisateur REC1, REC2 et d'une station de connexion sol, ce qui permet alors d'envisager une couverture complète de la Terre.

Le délai, pour communiquer avec un terminal utilisateur REC1 au sol est alors uniquement fonction de la fréquence de passage des satellites défilants LEO1, LEO2, LEO3, qui dépend directement de l'orbite choisie pour ces satellites et du nombre de ces satellites (pouvant aller jusqu'à une couverture continue de l'ensemble de la terre).

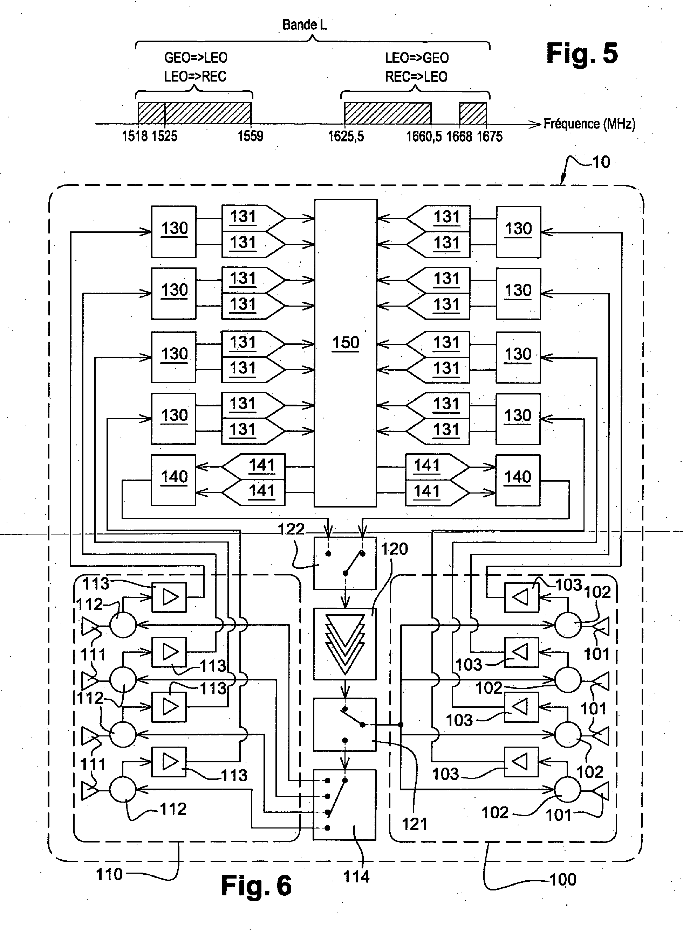

La figure 5 représente schématiquement l'utilisation, par un système de télécommunications selon l'invention, d'une même bande de fréquence, pour les communications entre des terminaux utilisateurs REC et des satellites défilants LEO, et pour les communications entre lesdits satellites défilants LEO et des satellites stationnaires GEO.

La figure 5 représente plus particulièrement un exemple d'utilisation de la bande L pour des applications du type MSS.

Tel qu'illustré par la figure 5, la bande L est organisée en sous-bandes utilisées, soit pour les communications montantes (d'un terminal utilisateur REC vers un satellite défilant LEO et/ou un satellite stationnaire GEO, et d'un satellite défilant LEO vers un satellite stationnaire GEO), soit pour les communications descendantes (d'un satellite stationnaire GEO vers un satellite défilant LEO et/ou un terminal utilisateur REC, et d'un satellite défilant LEO vers un terminal utilisateur REC). Dans cet exemple, la bande L correspond sensiblement aux fréquences comprises entre 1.518 GHz et 1.675GHz, et :
- la sous-bande utilisée pour les communications descendantes correspond aux fréquences comprises entre 1.518 et 1.559 GHz,
- la sous-bande utilisée pour les communications montantes correspond aux fréquences comprises entre 1.6265 et 1.6605 GHz, et aux fréquences comprises entre 1.668 et 1.675 GHz.

L'utilisation de sous-bandes de fréquence distinctes de la bande L pour les communications montantes et les communications descendantes correspond à un multiplexage fréquentiel desdites communications montantes et descendantes, connu dans la littérature anglo-saxonne sous le nom de « Frequency Division Duplex » (FDD). On comprend également que d'autres types de multiplexage des communications montantes et des communications descendantes, comme par exemple un multiplexage temporel ou « Time Division Duplex » (TDD), un multiplexage par répartition de codes du type CDMA, etc. Toutefois, l'utilisation d'un multiplexage fréquentiel FDD correspond à un mode préféré de mise en oeuvre du fait que les interférences entre communications montantes et descendantes sont réduites, et car l'utilisation d'un multiplexage temporel TDD peut s'avérer complexe compte tenu des délais de propagation inhérents aux systèmes de télécommunications par satellite.

Dans l'exemple représenté sur la figure 5, et pour une communication montante, un terminal utilisateur REC émet des données dans un canal donné (la sous-bande de fréquence de la bande L, utilisée pour les communications montantes, comportant préférentiellement plusieurs tels canaux) en direction d'un satellite défilant LEO. De préférence, le satellite défilant LEO répète lesdites données, de manière transparente ou régénérative, vers un satellite stationnaire GEO en utilisant le même canal que celui utilisé par le terminal utilisateur REC. Tel qu'indiqué précédemment, le satellite défilant LEO peut également, en alternative, répéter lesdites données dans un canal adjacent de la sous-bande de fréquence utilisée pour les communications montantes.

De manière analogue, pour une communication descendante, un satellite stationnaire GEO émet des données dans un canal donné (la sous-bande de fréquence de la bande L, utilisée pour les communications descendantes, comportant préférentiellement plusieurs tels canaux) en direction d'un satellite défilant LEO. De préférence, le satellite défilant LEO répète lesdites données, de manière transparente ou régénérative, vers un terminal utilisateur REC en utilisant le même canal. que celui utilisé par le satellite stationnaire GEO. Tel qu'indiqué précédemment, le satellite défilant LEO peut également, en alternative, répéter lesdites données dans un canal adjacent de la sous-bande de fréquence utilisée pour les communications montantes.

Selon une mise en oeuvre particulièrement avantageuse de l'invention, les émissions montantes, par un satellite défilant LEO à destination d'un satellite stationnaire GEO, et les émissions descendantes, par ledit satellite défilant LEO à destination d'un terminal utilisateur REC sont multiplexées dans le temps. En d'autres termes, les émissions montantes et les émissions descendantes par un même satellite défilant LEO sont effectuées au cours d'intervalles de temps différents.

En effet, une contrainte importante sur la conception d'une charge utile de satellite de télécommunications, et sur son coût de fabrication, provient de la puissance instantanée d'émission maximale devant être délivrée. Du fait du multiplexage temporel des émissions montantes et des émissions descendantes, ladite puissance instantanée d'émission maximale est réduite par rapport au cas d'émissions montantes et descendantes simultanées. Ceci est d'autant plus avantageux que, dans le cas de satellites de petite taille, la puissance instantanée d'émission maximale disponible est généralement limitée (par exemple de l'ordre de 60 à 150 W pour un satellite de masse comprise entre 100 à 200 kg).

La figure 6 représente schématiquement un mode préféré de réalisation d'une charge utile 10 d'un satellite répéteur défilant LEO, configurée pour multiplexer dans le temps les émissions montantes vers un satellite stationnaire GEO et les émissions descendantes vers un terminal utilisateur REC. On note que la charge utile 10 du satellite défilant LEO peut également comporter d'autres éléments non représentés sur la figure 6.

Tel qu'illustré par la figure 6, la charge utile 10 comporte un étage radioélectrique pour les communications avec le ou les satellites stationnaires GEO, dit « étage LEO/GEO » 100, ainsi qu'un étage radioélectrique pour les communications avec le ou les terminaux utilisateurs REC, dit « étage LEO/REC » 110.

Dans l'exemple non limitatif illustré par la figure 6, l'étage LEO/GEO 100 comprend quatre antennes 101 qui sont mises en oeuvre à la fois pour les émissions montantes et pour les réceptions descendantes. Une telle utilisation des antennes 101 à la fois pour les émissions montantes et pour les réceptions descendantes est rendue possible du fait que celles-ci sont effectuées dans la même bande de fréquence, par exemple dans les sous-bandes de fréquence de la bande L décrites en référence à la figure 5. Les antennes 101 peuvent être de tout type adapté, par exemple des antennes cornet, des antennes patch, etc.

Chaque antenne 101 est couplée à deux voies, une voie d'émission et une voie de réception, par exemple par l'intermédiaire d'un circulateur 102, de type connu en soi. Ce circulateur 102 est apte à router des signaux sur la voie d'émission vers l'antenne 101, et à router des signaux reçus par l'antenne vers la voie de réception.

Chaque voie de réception comporte un amplificateur à faible bruit ou LNA 103 (acronyme de l'expression anglaise « Low-Noise Amplifier »), qui peut être de tout type connu en soi.

De manière analogue, l'étage LEO/REC 110 comprend quatre antennes 111, qui sont mises en oeuvre à la fois pour les émissions descendantes et pour les réceptions montantes, pouvant être de tout type adapté, par exemple des antennes cornet, des antennes patch, etc.

Chacune des antennes 111 est couplée à deux voies, une voie d'émission et une voie de réception, par exemple par l'intermédiaire d'un circulateur 112, de type connu en soi. Chaque voie de réception comporte un amplificateur faible bruit ou LNA 113, qui peut être de tout type connu en soi.

En outre la charge utile 10 comprend un amplificateur de puissance ou PA 120 (acronyme de l'expression anglaise « Power Amplifier »), qui peut être de tout type connu en soi, par exemple un amplificateur SSPA (« Solid State Power Amplifier »), un amplificateur à tubes, etc.

Dans le mode préféré de réalisation illustré par la figure 6, l'amplificateur PA 120 est partagé entre l'étage LEO/GEO 100 et l'étage LEO/REC 110. En d'autres termes, l'amplificateur PA 120 est utilisé à la fois pour les émissions montantes et pour les émissions descendantes. Ceci est rendu possible, d'une part, du fait que les émissions montantes et les émissions descendantes sont effectuées dans la même bande de fréquence, par exemple dans les sous-bandes de fréquence de la bande L décrites en référence à la figure 5. Ceci est rendu possible, d'autre part, du fait que lesdites émissions montantes et lesdits émissions descendantes sont multiplexées dans le temps.

A cet effet, la charge utile 10 comporte des moyens de router un signal en sortie de l'amplificateur PA 120, représentatif de données à répéter, soit vers les antennes 101 de l'étage LEO/GEO 100, soit vers les antennes 111 de l'étage LEO/REC 110. Lesdits moyens de router se présentent, dans l'exemple non limitatif illustré par la figure 6, sous la forme d'un circuit commutateur 121.

Egalement à cet effet, la charge utile 10 comporte des moyens de multiplexer, en entrée de l'amplificateur PA 120, des signaux d'émissions montantes et des signaux d'émissions descendantes. Lesdits moyens de multiplexer se présentent, dans l'exemple non limitatif illustré par la figure 6, également sous la forme d'un circuit commutateur 122.

La charge utile 10 comporte également, couplés à chacune des voies de réception, des circuits démodulateurs 130, de type connu en soi, en sortie desquels sont obtenues deux voies en quadrature de phase connues sous le nom de voies I et Q. Les signaux obtenus sur chacune de ces voies sont ensuite numérisés au moyen de convertisseurs analogique/numérique 131, de type connu en soi, en vue d'un traitement par un module de traitement 150, tel qu'un microcontrôleur et/ou un FPGA.

Les signaux traités par le module de traitement 150, représentatifs des données à répéter et se présentant sous la forme de deux voies I et Q à émettre en quadrature de phase, sont convertis en signaux analogiques au moyen de convertisseurs numérique/analogique 141. Les signaux en sortie desdits convertisseurs numérique/analogique 141 sont ensuite fournis en entrée de circuits modulateurs 140, de type connu en soi, qui sont couplés au circuit commutateur 122 en entrée de l'amplificateur PA 120.

En outre, sans que cela ne soit représenté sur la figure 6, le module de traitement 150 est couplé au circuit commutateur 122 en entrée de l'amplificateur PA 120 et au circuit commutateur 121 en sortie de l'amplificateur PA 120. Le module de traitement 150 est en outre configuré pour commander lesdits circuits commutateurs 121, 122 de façon sensiblement synchronisée afin d'utiliser ledit amplificateur PA 120 tantôt pour les émissions montantes, tantôt pour les émissions descendantes.

On comprend que l'intérêt du mode préféré de réalisation illustré par la figure 6 réside tout particulièrement dans le fait qu'un même amplificateur de puissance PA 120 est utilisé tantôt pour les émissions montantes, tantôt pour les émissions descendantes. En effet, cela contribue à réduire le nombre d'amplificateurs de puissance devant être embarqués dans un satellite défilant LEO, ce qui présente au moins les avantages suivants :
- les amplificateurs de puissance étant des dispositifs qui consomment généralement beaucoup d'énergie, la diminution du nombre d'amplificateurs de puissance nécessaires permet de réduire les besoins en énergie du satellite défilant LEO,
- les amplificateurs de puissance étant des dispositifs généralement volumineux, la diminution du nombre d'amplificateurs de puissance nécessaires permet de fabriquer des satellites défilants LEO plus compacts,
- ceci conduit à des satellites défilants LEO moins coûteux à fabriquer et à lancer.

Selon une variante de réalisation de la charge utile 10, également illustrée par la figure 6, l'étage LEO/REC 110 comporte en outre des moyens de router un signal en sortie de l'amplificateur PA, plus particulièrement en sortie du circuit commutateur 121, vers l'une quelconque desdites antennes 111 d'émission descendante.

Dans l'exemple non limitatif illustré par la figure 6, ces moyens de router se présentent sous la forme d'un circuit commutateur, dit « circuit de balayage » 114, par exemple commandé par le module de traitement 150 (commande non représentée sur la figure 6).

Du fait du circuit de balayage 114, la charge utile 10 est apte, pour les émissions descendantes, à activer successivement les antennes 111. Par exemple, si les antennes 111 sont des antennes directives de directions de visée différentes, cela permet de balayer des zones différentes à la surface de la Terre pour répéter des données vers des terminaux utilisateurs REC différents, tout en émettant dans chacune de ces zones avec la puissance instantanée d'émission maximale.

De préférence, ladite charge utile 10 est configurée pour activer simultanément en réception chacune des antennes 111 de l'étage LEO/REC 110. En d'autres termes, lors des intervalles de temps au cours desquels la charge utile 10 effectuera une réception montante de données de terminaux utilisateurs REC, toutes les antennes 111 seront reliées par leur voie de réception au module de traitement 150, qui traitera les signaux reçus simultanément sur chacune de ces antennes 111. En effet, cela permettra d'augmenter la durée pendant laquelle des signaux pourront être reçus de terminaux utilisateurs REC.

Rien n'exclut, suivant des modes particuliers de réalisation, d'avoir un circuit de balayage 114 plus complexe permettant d'activer simultanément plusieurs antennes 111 (deux antennes sur quatre, trois antennes sur quatre, etc.), et d'activer successivement plusieurs groupes d'antennes 111.

En outre, rien n'exclut, suivant des modes particuliers de réalisation, de prévoir également un circuit de balayage pour les antennes 101 de l'étage LEO/GEO 100. Ceci peut être avantageux par exemple pour communiquer avec différents satellites stationnaires GEO, les antennes 101 présentant alors des directions de visée différentes.

Il est à noter que, en variante de réalisation de la charge utile 10 de la figure 6, un même circuit commutateur à une entrée (couplée à l'amplificateur PA 120) et cinq sorties (quatre sorties couplées respectivement à chacune des quatre antennes 111 de l'étage LEO/REC 110, et une sortie couplée à toutes les antennes 101 de l'étage LEO/GEO 100) pourrait être utilisé au lieu du circuit commutateur 121 (en sortie de l'amplificateur PA 120) et du circuit de balayage 114.

Selon une variante préférée de mise en oeuvre de l'invention, au niveau d'un satellite défilant LEO, le satellite défilant LEO multiplexe dans le temps les émissions montantes et les réceptions montantes. En d'autres termes, le satellite défilant LEO n'effectue pas de réception montante lors des intervalles de temps où il effectue ou est susceptible d'effectuer une émission montante.

De préférence, le satellite défilant LEO multiplexe également dans le temps les émissions descendantes et les réceptions descendantes. En d'autres termes, le satellite défilant LEO n'effectue pas de réception descendante lors des intervalles de temps où il effectue ou est susceptible d'effectuer une émission descendante.

Selon l'invention, les communications entre des terminaux utilisateurs REC et des satellites défilants LEO, et pour les communications entre lesdits satellites défilants LEO et des satellites stationnaires GEO, utilisent une même bande de fréquence.

Plus particulièrement, si l'on se place dans l'exemple non limitatif illustré par la figure 5, les communications montantes utilisent une première sous-bande de fréquence de la bande L, tandis que les communications descendantes utilisent une seconde sous-bande de fréquence de la bande L.

On comprend donc que, d'un point de vue du satellite défilant LEO, une émission montante vers un satellite stationnaire GEO pourra perturber une réception montante simultanée effectuée par ce satellite défilant LEO, dans la mesure où ces communications sont effectuées dans la même sous-bande de fréquence de la bande L. C'est également le cas, d'un point de vue du satellite défilant LEO, pour une émission descendante simultanée à une réception descendante effectuée par ce satellite défilant LEO.

De telles perturbations pourraient être réduites en isolant l'étage LEO/GEO 100 de l'étage LEO/REC 110, mais cette isolation s'accompagnerait de l'ajout de dispositifs supplémentaires d'isolation et/ou d'un éloignement accru des antennes 101 de l'étage LEO/GEO 100 et des antennes 111 l'étage LEO/REC 110. En multiplexant dans le temps, au niveau du satellite défilant LEO, les émissions montantes et les réceptions montantes d'une part, les émissions descendantes et les réceptions descendantes d'autre part, de telles perturbations sont supprimées. Cette suppression est obtenue sans avoir à ajouter de dispositifs supplémentaires d'isolation. De plus, les antennes 101 de l'étage LEO/GEO 100 et les antennes 111 l'étage LEO/REC 110 peuvent être rapprochés, par exemple agencées sur des faces adjacentes du satellite défilant LEO.

Il est à noter que le multiplexage temporel, au niveau d'un satellite défilant LEO, des émissions montantes et des réceptions montantes d'une part, et des émissions descendantes et des réceptions descendantes d'autre part, permet de simplifier grandement la conception des étages LEO/GEO 100 et LEO/REC 110 d'un point de vue isolation électromagnétique. De telles dispositions pourraient par conséquent être envisagées indépendamment du multiplexage temporel des émissions montantes et des émissions descendantes, qui permettent un meilleur partage de la puissance embarquée à bord du satellite défilant LEO.

Toutefois, on comprend que la combinaison du multiplexage temporel des émissions montantes et des émissions descendantes, et du multiplexage temporel des émissions montantes et des réceptions montantes d'une part, et des émissions descendantes et des réceptions descendantes d'autre part, permet la conception de satellites défilants LEO particulièrement compacts et avec un coût mieux maîtrisé.

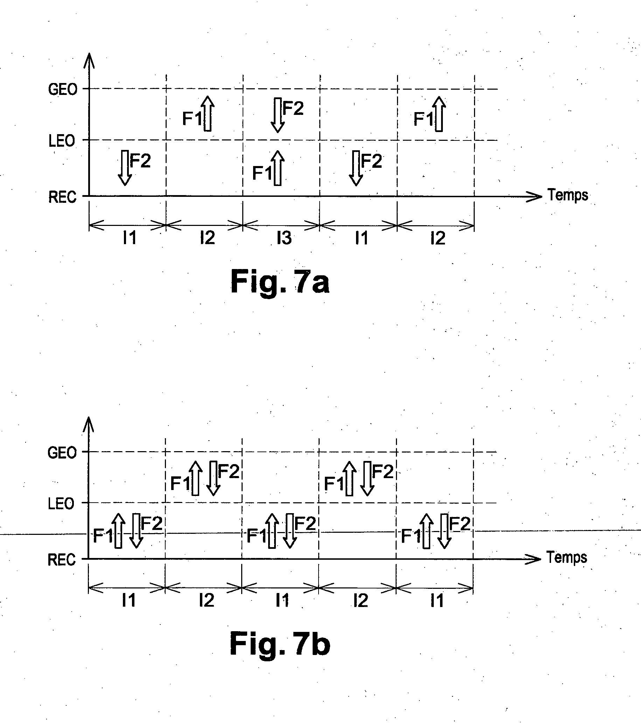

Les figures 7a et 7b illustrent deux exemples de mise en oeuvre.

Dans ces exemples, on a désigné par F1 la sous-bande de fréquence utilisée pour les communications montantes et par F2 la sous-bande de fréquence utilisée pour les communications descendantes.

Il est à noter que les exemples illustrés par les figures 7a et 7b se placent du point de vue du satellite défilant LEO. On note notamment les points suivants :
- une flèche montante F1 entre un terminal utilisateur REC et un satellite défilant LEO indique un intervalle de temps au cours duquel le satellite défilant LEO effectue une réception dans la sous-bande F1. L'absence d'une telle flèche montante F1 signifie que ledit satellite défilant LEO n'effectue pas de réception dans la sous-bande F1, mais n'implique pas que le terminal utilisateur REC n'émet pas de signal dans ladite sous-bande F1 ; en particulier, si les conditions le permettent, le terminal utilisateur REC peut émettre un signal directement à l'attention du satellite stationnaire GEO (la coexistence des signaux émis dans la sous-bande F1 par le terminal utilisateur REC et le satellite défilant LEO pouvant se faire par exemple avec une interface air CDMA et utilisation d'un récepteur Rake au niveau de la station sol de connexion GES) ;
- une flèche descendante F2 entre un satellite stationnaire GEO et un satellite défilant LEO indique un intervalle de temps au cours duquel le satellite défilant LEO effectue une réception dans la sous-bande F2. L'absence d'une telle flèche descendante F signifie que ledit satellite défilant LEO n'effectue pas de réception dans la sous-bande F2, mais n'implique pas que le satellite stationnaire GEO n'émet pas de signal dans ladite sous-bande F2 ; en particulier, si les conditions le permettent, le satellite stationnaire GEO peut émettre un signal directement à l'attention du terminal utilisateur (la coexistence des signaux émis dans la sous-bande F2 par le satellite stationnaire GEO et le satellite défilant LEO pouvant se faire par exemple avec une interface air CDMA et utilisation d'un récepteur Rake au niveau du terminal utilisateur REC).

Dans l'exemple illustré par la figure 7a, le multiplexage temporel, au niveau d'un satellite défilant LEO, s'articule principalement autour de trois intervalles temporels I1, I2 et I3.

Au cours d'un premier intervalle temporel I1, le satellite défilant LEO effectue les émissions descendantes dans la sous-bande F2 en direction d'un ou de plusieurs terminaux utilisateurs REC.

Au cours d'un second intervalle temporel I2, le satellite défilant LEO effectue les émissions montantes dans la sous-bande F1 en direction d'un ou de plusieurs satellites stationnaires GEO.

Au cours d'un troisième intervalle temporel I3, le satellite défilant LEO effectue simultanément les réceptions montantes dans la sous-bande F1 et les réceptions descendantes dans la sous-bande F2.

Cet enchainement des intervalles temporels I1, I2 et I3 est de préférence effectué de façon récurrente. Par exemple, la durée de chacun des ces intervalles temporels peut être de valeur fixe prédéterminée, ou variable à déterminer selon des critères prédéfinis. A titre d'exemple, la durée de chacun de ces intervalles temporels pourra être comprise entre quelques dixièmes de seconde et quelques dizaines de secondes.

Dans un mode préféré de réalisation, et tel qu'illustré par la figure 7b, la charge utile 10 est configurée pour effectuer les réceptions montantes simultanément aux émissions descendantes, et pour effectuer les réceptions descendantes simultanément aux émissions montantes.

Tel qu'illustré par la figure 7b, le multiplexage temporel s'articule alors principalement autour de deux intervalles temporels I1 et I2.

Au cours d'un premier intervalle temporel I1, le satellite défilant LEO effectue les émissions descendantes dans la sous-bande F2 en direction d'un ou de plusieurs terminaux utilisateurs REC, ainsi que les réceptions montantes dans la sous-bande F1 de signaux éventuellement émis par un ou des terminaux utilisateurs REC.

Au cours d'un second intervalle temporel I2, le satellite défilant LEO effectue les émissions montantes dans la sous-bande F1 en direction d'un ou de plusieurs satellites stationnaires GEO, ainsi que les réceptions descendantes dans la sous-bande F2 de signaux éventuellement émis par un ou des satellites stationnaires GEO.

Cet enchainement des intervalles temporels I1 et I2 est de préférence effectué de façon récurrente. Par exemple, la durée de chacun des ces intervalles temporels peut être de valeur fixe prédéterminée, ou variable à déterminer selon des critères prédéfinis. A titre d'exemple, la durée de chacun de ces intervalles temporels pourra être comprise entre quelques dixièmes de seconde et quelques dizaines de secondes.

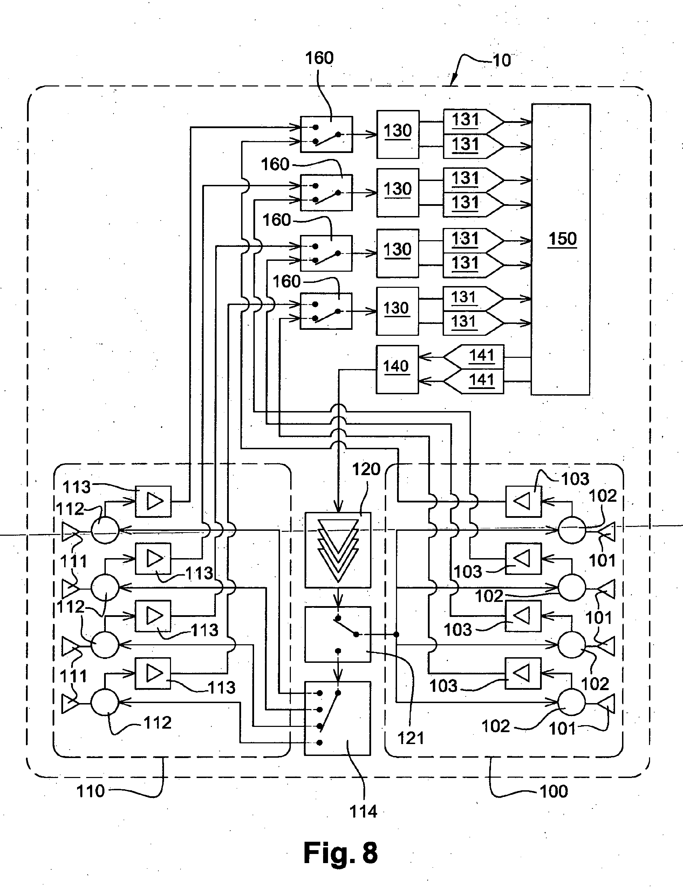

La figure 8 représente une variante de réalisation de la charge utile de la figure 6, adaptée pour un fonctionnement de charge utile 10 de satellite répéteur défilant LEO tel qu'illustré par la figure 7b.

Par rapport à la charge utile 10 illustrée par la figure 6, un plus grand nombre de composants sont utilisés à la fois pour les communications avec un ou plusieurs satellites stationnaires GEO et pour les communications avec un ou plusieurs terminaux utilisateurs REC.

Ceci est rendu possible par le fait que ces communications, du point de vue du satellite défilant LEO, sont multiplexées dans le temps, comme le souligne la figure 7b.

Ainsi, par rapport à la charge utile 10 illustrée par la figure 6, les composants suivants sont partagés :
- les circuits modulateurs 140: le partage de ces composants permet d'en réduire le nombre de deux à un,
- les convertisseurs numérique/analogique 141 : le partage de ces composants permet d'en réduire le nombre de quatre à deux,
- les circuits démodulateurs 130 : le partage de ces composants permet d'en réduire le nombre de huit à quatre,
- les convertisseurs analogiqué/numérique 131 : le partage de ces composants permet d'en réduire le nombre de seize à huit.

Par rapport à la charge utile 10 de la figure 6, le circuit commutateur 122 en entrée de l'amplificateur PA 120 a été supprimé, le multiplexage étant effectué directement par le module de traitement 150..

Par contre, des circuits commutateurs 160 ont été ajoutés en entrée des circuits démodulateurs 130, commandés par le module de traitement 150 (commande non représentée sur la figure), afin de les relier à la fois à l'étage LEO/GEO 100 et à l'étage LEO/REC 110.

On comprend donc que, du fait de l'utilisation d'une même bande de fréquence et du fait du multiplexage temporel des communications avec les satellites stationnaires et des communications avec les terminaux utilisateurs, il possible d'obtenir une charge utile 10 particulièrement optimisée.

Il est à noter que d'autres composants peuvent également être partagés, comme par exemple les amplificateurs LNA 103, 113.

### Avantages de l'invention

Grâce à la combinaison d'une constellation de satellites défilants LEO (qui permet de fournir un service plus performant aux régions polaires) et d'une constellation de satellites stationnaires GEO (qui fournit un service de qualité aux régions équatoriales et aux basses latitudes), la durée moyenne de non visibilité d'un satellite pour un terminal utilisateur se trouve annulée ou fortement réduite par rapport aux systèmes de l'art antérieur, notamment lorsque de forts angles d'élévation sont recherchés (dans le cas des communications mobiles par satellite le facteur de blocage du signal est réduit à forte élévation ce qui conduit à une meilleure disponibilité du service).

On comprend qu'un système tel que décrit permet d'offrir une disponibilité nettement accrue (par le biais d'une couverture quasi-continue) pour les utilisateurs amenés à évoluer dans des zones reculées et peu couvertes par les systèmes de communications traditionnels. C'est le cas par exemple pour les zones polaires, par le biais d'une constellation en orbite polaire ou quasi-polaire).

En outre, . un multiplexage adapté des différentes tâches d'émission/réception des charges utiles des satellites défilants LEO permet d'en simplifier fortement la conception et d'en réduire le coût de fabrication, tout en conservant un niveau de performances élevé.

D'autres avantages de l'invention apparaissent particulièrement bien lorsqu'on la compare aux solutions existantes, utilisant soit des satellites en orbite basse, soit des satellites géostationnaires, soit des constellations hybrides.

Comparé à une solution de communications par satellite employant une constellation de satellites en orbite basse (tels que Orbcomm ou Argos par exemple), les avantages procurés par l'invention sont multiples :
- il n'est pas nécessaire de déployer de stations de connexion pour les communications entre les satellites défilants LEO et l'infrastructure réseau terrestre ; en effet, la station de connexion du ou des satellites stationnaires GEO garantissent un accès permanent aux satellites défilants LEO ;
- il n'est pas nécessaire de déployer des stations de Télécommande/Télémesure & Contrôle (TT&C) de la constellation de satellites défilants, les signaux de TT&C étant également relayés par le ou les satellites stationnaires GEO ; on comprend que le contrôle des satellites défilants LEO est effectué, depuis le sol, par les stations de contrôle des satellites stationnaires GEO, à travers ces satellites stationnaires GEO ;
- une conception des satellites défilants LEO nettement simplifiée du fait d'un fonctionnement des charges utiles de ces satellites défilants LEO permettant de partager la puissance embarquée entre les émissions montantes et le émissions descendantes, et permettant de réduire les besoins d'isolation électromagnétique entre étage LEO/GEO et étage LEO/REC.

Comparé à une solution de communications par satellite employant un satellite en orbite géostationnaire, les avantages procurés par l'invention sont :
- une extension de la couverture du satellite stationnaire GEO pour couvrir par exemple les zones polaires,
- un temps de latence réduit pour l'accès au réseau et pour la réception d'accusé de réception.

Comparé à un système (inclus dans l'état de la technique) de télécommunications par satellite hybride comprenant un ou plusieurs satellites en orbite géostationnaire et une constellation de satellites en orbite basse, les avantages procurés par l'invention sont :
- l'utilisation d'un protocole commun entre les deux systèmes, plus efficace que chaque protocole pris séparément.
- une mutualisation de la bande de fréquence utilisée, avec des mécanismes assurant que les interférence intra-système sont limitées.

Du fait de sa conception, le concept est particulièrement adapté aux terminaux utilisateur ayant une faible directivité et ne nécessitant pas le maintien du pointage en direction des satellites en orbite basse. En effet, il suffit que le terminal utilisateur pointe vers un satellite stationnaire GEO ou défilant LEO pour assurer la communication.

Les applications envisagées concernent l'amélioration des futurs systèmes mobiles par satellites en orbite géostationnaire (MISS ou « Mobile Satellite Services »), incluant les services mobiles aéronautiques par satellites tels que AMSS (« Aeronautical Mobile Satellite Service ») et AMSRS (« Aeronautical Mobile Satellite Route Services »), en bande UHF, L, S, C ou X s'appuyant sur le déploiement d'une constellation en orbite basse beaucoup moins complexe que les constellations MSS existantes (telles que Globalstar ou Iridium) pour des communications de type voix, données ou des échanges de messages de machine à machine (M2M).

Ce concept peut également s'appliquer aux systèmes de diffusion mobile par satellite de données, télévision ou radio (par exemple la diffusion radio au standard S-DAB utilisant une allocation BSS en bande L ou la diffusion de télévision mobile au standard DVB-SH utilisant une allocation MSS en bande S).

Une autre utilisation de ce concept concerne les échanges de données pour des applications de navigation (maritime ou aéronautique, notamment). Dans ces applications, connues de l'homme du métier sous le nom SBAS (de l'anglais « Satellite Based Augmentation System »), il n'existe pas actuellement de moyen de couvrir les terminaux mobiles situés au voisinage des pôles. L'invention permet de remédier à ce problème avec un satellite en orbite géostationnaire, et un satellite en orbite basse défilant en vue du mobile.

De même, à l'intérieur d'une zone de service d'un satellite géostationnaire il existe des zones d'ombre pour laquelle le satellite géostationnaire n'est pas en visibilité directe des terminaux de surface à cause de phénomènes de masquage par des bâtiments ou des éléments naturels (arbres, montagnes, ...). La couverture d'une zone d'ombre de ces dispositifs de communications traditionnels est éventuellement possible, dès lors que cette zone peut venir en vue d'un satellite défilant en orbite basse.

L'utilisation d'un système ou d'un procédé de télécommunications, conformes à l'invention permet donc d'étendre la zone de couverture de moyens de communication comportant des zones d'ombre, et notamment d'étendre la zone de couverture d'un système SBAS utilisant un satellite géostationnaire.

Dans le cas où le répéteur spatial transmet dans un canal adjacent à celui du satellite stationnaire GEO et de façon régénérative, un atout de l'invention concerne la possibilité d'une éventuelle simplification des protocoles d'échanges entre les terminaux utilisateurs et les satellites défilants LEO.

Les satellites défilants LEO peuvent notamment réaliser une conversion vers un protocole d'échanges spécifique pour le GEO (pour tenir compte, par exemple, des contraintes de délai de propagation propres au GEO), ou une agrégation des messages et une optimisation de l'utilisation de la bande passante.

Un autre attrait important de ce concept est la possibilité d'avoir une liaison permanente et quasi temps réel entre le réseau de contrôle et de mission et la constellation de satellites déflants LEO au travers de la station de connexion et du relais GEO.

On comprend par ailleurs que le système ne nécessite pas obligatoirement le déploiement d'une constellation de satellites défilants LEO ou stationnaire GEO dédiée. Il est en effet possible d'utiliser des capacités de transmission disponibles sur des constellations de satellites stationnaires GEO déjà existantes.

On choisit dans ce cas naturellement la bande de fréquences de la constellation de satellites stationnaires GEO utilisée comme bande de fréquence de travail des satellites défilants LEO. Ceci permet de résoudre le problème du peu de bandes de fréquences disponibles pour les services mobiles par satellite utilisant des satellites non-géostationnaires, et cela offre donc un intérêt réglementaire pour le déploiement d'une constellation de satellites défilants LEO opérant à titre secondaire dans la même bande fréquence que le (ou les) satellites stationnaires GEO.

De même, les fonctions envisagées pour les satellites défilants LEO peuvent en fait être réalisées au moyen des charges utiles embarquées comme passagers sur des satellites défilants LEO dédiés principalement à d'autres fonctions. Dans ce cas, le critère déterminant est l'orbite envisagée pour le satellite défilant LEO. Un choix avantageux est celui de satellites d'observation de la Terre, qui utilisent fréquemment une orbite héliosynchrone très inclinée, et couvrant donc les latitudes élevées.

Cette mise en oeuvre des charges utiles en tant que passagers, et naturellement très avantageuse en termes de coût de déploiement du système.

Le système décrit ici constitue donc une solution simple et économique en comparaison d'autres alternatives possibles telles que :
- le déploiement d'un grand nombre de stations sols pour offrir une connexion permanente entre les satellites défilants LEO et le sol, qui est une solution coûteuse et complexe à implémenter en particulier pour couvrir les océans (la constellation Globalstar est une bonne illustration de cette difficulté) ;
- l'utilisation de liaisons inter-satellites pour offrir une connexion permanente entre les satellites défilants LEO et un nombre limité de stations sols ; cette solution a l'inconvénient d'ajouter de la complexité et un surcoût au niveau du segment spatial (la constellation Iridium est une bonne illustration de cette solution).

Enfin, l'architecture avantageuse et moins onéreuse de la charge utile, tel que décrite précédemment, permet de réduire le coût du système sans sacrifier ses performances. En l'occurrence, la réduction significative de la complexité des plates-formes satellites répéteurs défilants utilisées permet de diminuer leur prix et/ou d'augmenter le nombre de satellites déployés dans le système de télécommunications.

### Variantes de l'invention

L'utilisation de la diversité spatiale (ou des techniques MIMO) au niveau du terminal utilisateur pour recombiner les signaux provenant à la fois du satellite stationnaire GEO et du satellite défilant LEO peut être envisagée afin d'améliorer le bilan de liaison de manière supplémentaire.

Le répéteur satellite peut être un simple répéteur analogique « transparent » qui est la solution la plus simple mais impose des contraintes de design sur l'interface air de façon à limiter les interférences au niveau du terminal entre les signaux provenant du satellite stationnaire GEO et les signaux relayés par le satellite défilant LEO.

Une solution alternative consiste à relayer le signal (de manière transparente ou régénérative) dans un canal d'une même bande de fréquence à bord du satellite répéteur. Cette solution nécessite une entité de coordination pour coordonner les plans de fréquences entre les satellites stationnaires GEO et défilants LEO.

La constellation de satellites relais peut également implanter des fonctionnalités additionnelles (« store & forward », agrégations de signaux).

La constellation de satellites répéteurs peut offrir une couverture globale ou partielle de la Terre selon les objectifs visés.

La constellation de satellites répéteurs peut offrir une couverture continue dans le temps (pour des services temps réels disponibles à tout instant) ou seulement un accès avec un certain délai (pour des services non temps réels) utilisant des constellations avec un nombre réduit de satellites.

Il est également clair que le concept décrit, utilisant la même bande de fréquence pour les communications entre les terminaux de surface et les satellites répéteurs et pour les communications entre les satellites répéteurs et les satellites stationnaires, peut s'appliquer seulement sur la voie aller ou sur la voie retour ou dans les deux sens.

## Revendications

1. Charge utile (10) de satellite répéteur (LEO) d'un système de télécommunications, ledit satellite répéteur étant destiné à être placé en orbite défilante au-dessus de la surface de la Terre, et la charge utile (10) étant configurée pour répéter des données reçues d'un satellite stationnaire (GEO) au-dessus de la surface de la Terre vers un terminal (REC) sensiblement à la surface de la Terre, et pour répéter des données reçues du terminal vers le satellite stationnaire, **caractérisée en ce que** ladite charge utile (10) comporte au moins un amplificateur de puissance (120) et est en outre configurée pour :
- utiliser une même bande de fréquence pour la répétition de données vers le satellite stationnaire (GEO), dite « émission montante », et pour la répétition de données vers le terminal (REC), dite « émission descendante », ladite bande de fréquence étant l'une quelconque des bandes VHF, UHF, L, S, C, X, Ka, Q,
- effectuer les émissions montantes et les émissions descendantes au cours d'intervalles de temps différents,
- utiliser ledit amplificateur de puissance à la fois pour des émissions montantes et pour des émissions descendantes.

2. Charge utile (10) selon la revendication 1, **caractérisée en ce qu'**elle comporte :
- au moins une antenne (101) d'émission montante,
- au moins une antenne (111) d'émission descendante,
- des moyens (121) de router un signal en sortie de l'amplificateur de
puissance (120), représentatif de données à répéter, soit vers ladite antenne d'émission montante soit vers ladite antenne d'émission descendante.

3. Charge utile (10) selon la revendication 2, **caractérisée en ce qu'**elle comporte des moyens (122) de multiplexer, en entrée de l'amplificateur de puissance (120), des signaux d'émissions montantes et des signaux d'émissions descendantes.

4. Charge utile (10) selon l'une des revendications précédentes, **caractérisée en ce qu'**elle comporte :
- plusieurs antennes (111) d'émission descendante,
- des moyens (114) de router un signal en sortie de l'amplificateur de puissance (120), représentatif de données à répéter, vers l'une quelconque desdites antennes d'émission descendante.

5. Charge utile (10) selon l'une des revendications précédentes, **caractérisée en ce qu'**elle est configurée pour utiliser la même bande de fréquence, utilisée pour les émissions montantes et les émissions descendantes, pour la réception de données à répéter du terminal (REC), dite « réception montante », et pour la réception de données à répéter du satellite stationnaire (GEO), dite « réception descendante ».

6. Charge utile (10) selon la revendication 5, **caractérisée en ce qu'**elle comporte plusieurs antennes (111) de réception montante, ladite charge utile étant configurée pour recevoir simultanément sur chacune desdites antennes de réception montante.

7. Charge utile (10) selon l'une des revendications 5 à 6, **caractérisée en ce qu'**elle est configurée pour multiplexer dans le temps les émissions montantes et les réceptions montantes, et/ou pour multiplexer dans le temps les émissions descendantes et les réceptions descendantes.

8. Charge utile (10) selon l'une des revendications 5 à 7, **caractérisée en ce qu'**elle est configurée pour utiliser une même première sous-bande (F1) de fréquence de la bande de fréquence pour les réceptions montantes et les émissions montantes, et utiliser une même seconde sous-bande (F2) de fréquence de la bande de fréquence pour les réceptions descendantes et les émissions descendantes.

9. Charge utile (10) selon l'une des revendications 5 à 8, **caractérisée en ce qu'**elle est configurée pour effectuer les réceptions montantes simultanément aux émissions descendantes, et pour effectuer les réceptions descendantes simultanément aux émissions montantes.

10. Système de télécommunications, destiné au transfert de données entre au moins un terminal (REC), situé sensiblement à la surface de la Terre, et au moins un satellite stationnaire (GEO) au dessus de la surface de la Terre, **caractérisé en ce qu'**il comporte un ou plusieurs satellites répéteurs (LEO) de signaux, lesdits satellites répéteurs défilant au-dessus de la surface de la Terre et comportant une charge utile (10) selon l'une quelconque des revendications précédentes.

11. Procédé de télécommunications, destiné au transfert de données entre un terminal (REC), situé sensiblement à la surface de la Terre, et un satellite stationnaire (GEO) au-dessus de la surface de la Terre, le transfert de données entre ledit terminal et ledit satellite stationnaire s'effectuant par l'intermédiaire d'un satellite répéteur (LEO) configuré pour répéter des données reçues dudit satellite stationnaire vers ledit terminal et pour répéter des données reçues dudit terminal vers ledit satellite stationnaire, **caractérisé en ce que** le satellite répéteur (LEO) :
- utilise une même bande de fréquence pour la répétition de données vers le satellite stationnaire (GEO), dite « émission montante », et pour la répétition de données vers le terminal (REC), dite « émission descendante », ladite bande de fréquence étant l'une quelconque des bandes VHF, UHF, L, S, C, X, Ka, Q,
- effectue les émissions montantes et les émissions descendantes au cours d'intervalles de temps différents,
- utilise un même amplificateur de puissance (120) pour les émissions montantes et pour les émissions descendantes.

12. Procédé selon la revendication 11, **caractérisé en ce que** le satellite répéteur (LEO) utilise la même bande de fréquence, utilisée pour les émissions montantes et les émissions descendantes, pour la réception de données à répéter du terminal, dite « réception montante », et pour la réception de données à répéter du satellite stationnaire, dite « réception descendante ».

13. Procédé selon la revendication 12, **caractérisé en ce que** le satellite répéteur (LEO) multiplexe dans le temps les émissions montantes et les réceptions montantes, et/ou ledit satellite répéteur (LEO) multiplexe dans le temps les émissions descendantes et les réceptions descendantes.

14. Procédé selon l'une des revendications 12 à 13, **caractérisé en ce que** le satellite répéteur (LEO) utilise une même première sous-bande (F1) de fréquence de la bande de fréquence pour les réceptions montantes et les émissions montantes, et utilise une même seconde sous-bande (F2) de fréquence de la bande de fréquence pour les réceptions descendantes et les émissions descendantes.

## Patentansprüche

1. Nutzlast (10) eines Wiederholungssatelliten (LEO) eines Telekommunikationssystems, wobei der Wiederholungssatellit dazu bestimmt ist, in einer nicht stationären Umlaufbahn über der Oberfläche der Erde angeordnet zu werden, und wobei die Nutzlast (10) derart konfiguriert ist, dass sie Daten wiederholt, die von einem stationären Satelliten (GEO) oder der Oberfläche der Erde zu einem Terminal (REC) im Wesentlichen auf der Erdoberfläche empfangen werden, und Daten wiederholt, die von dem Terminal zum stationären Satelliten empfangen werden, **dadurch gekennzeichnet, dass** die Nutzlast (10) mindestens einen Leistungsverstärker (120) umfasst und ferner dazu vorgesehen ist:
- ein selbes Frequenzband für die Wiederholung von Daten zu dem stationären Satelliten (GEO), "aufsteigendes Senden" genannt, und für die Wiederholung von Daten zu dem Terminal (REC), "absteigendes Senden" genannt, zu verwenden, wobei das Frequenzband eines der Bänder VHF, UHF, L, S, C, X, Ka, Q ist,
- das aufsteigende Senden und das absteigende Senden während unterschiedlicher Zeitintervalle durchzuführen,
- den Leistungsverstärker sowohl für aufsteigendes Senden als auch für absteigendes Senden zu verwenden.

2. Nutzlast (10) nach Anspruch 1, **dadurch gekennzeichnet, dass** sie umfasst:
- mindestens eine Antenne (101) zum aufsteigenden Senden,
- mindestens eine Antenne (111) zum absteigenden Senden,
- Mittel (121), um ein Signal am Ausgang des Leistungsverstärkers (120), das für zu wiederholende Daten repräsentativ ist, entweder zu der Antenne zum aufsteigenden Senden oder zu der Antenne zum absteigenden Senden zu routen.

3. Nutzlast (10) nach Anspruch 2, **dadurch gekennzeichnet, dass** sie Mittel (122) umfasst, um am Eingang des Leistungsverstärkers (120) aufsteigende Sendesignale und absteigende Sendesignale zu multiplexen.

4. Nutzlast (10) nach einem der vorhergehenden Ansprüche, **dadurch gekennzeichnet, dass** sie umfasst:
- mehrere Antennen (111) zum absteigenden Senden,
- Mittel (114), um ein Signal am Ausgang des Leistungsverstärkers (120), das für zu wiederholende Daten repräsentativ ist, zu einer der Antennen zum absteigenden Senden zu routen.

5. Nutzlast (10) nach einem der vorhergehenden Ansprüche, **dadurch gekennzeichnet, dass** sie derart vorgesehen ist, dass sie dasselbe Frequenzband, das für das aufsteigende Senden und das absteigende Senden verwendet wurde, für das Empfangen von zu wiederholenden Daten vom Terminal (REC), "aufsteigendes mpfangen" genannt, und für das Empfangen von zu wiederholenden Daten vom stationären Satelliten (GEO), "absteigendes Empfangen" genannt, verwendet.

6. Nutzlast (10) nach Anspruch 5, **dadurch gekennzeichnet, dass** sie mehrere Antennen (111) zum aufsteigenden Empfangen umfasst, wobei die Nutzlast derart vorgesehen ist, dass sie gleichzeitig auf jeder der Antennen zum aufsteigenden Empfangen empfängt.

7. Nutzlast (10) nach einem der Ansprüche 5 bis 6, **dadurch gekennzeichnet, dass** sie derart vorgesehen ist, dass sie das aufsteigende Senden und das aufsteigende Empfangen zeitmultiplext, und/oder das absteigende Senden und das absteigende Empfangen zeitmultiplext.

8. Nutzlast (10) nach einem der Ansprüche 5 bis 7, **dadurch gekennzeichnet, dass** sie derart vorgesehen ist, dass sie ein selbes erstes Unterfrequenzband (F1) des Frequenzbandes für das aufsteigende Empfangen und das aufsteigende Senden verwendet, und ein selbes zweites Unterfrequenzband (F2) des Frequenzbandes für das absteigende Empfangen und das absteigende Senden verwendet.

9. Nutzlast (10) nach einem der Ansprüche 5 bis 8, **dadurch gekennzeichnet, dass** sie derart vorgesehen ist, dass sie das aufsteigende Empfangen gleichzeitig mit dem absteigenden Senden durchführt, und das absteigende Empfangen gleichzeitig mit dem aufsteigenden Senden durchführt.

10. Telekommunikationssystem, das für den Transfer von Daten zwischen mindestens einem Terminal (REC), der sich im Wesentlichen auf der Oberfläche der Erde befindet, und mindestens einem stationären Satelliten (GEO) über der Oberfläche der Erde bestimmt ist, **dadurch gekennzeichnet, dass** es einen oder mehrere Signalwiederholungssatelliten (LEO) umfasst, wobei die Wiederholungssatelliten über der Oberfläche der Erde ablaufen und eine Nutzlast (10) nach einem der vorhergehenden Ansprüche umfassen.

11. Telekommunikationsverfahren, das für den Transfer von Daten zwischen einem Terminal (REC), der sich im Wesentlichen auf der Oberfläche der Erde befindet, und einem stationären Satelliten (GEO) über der Oberfläche der Erde bestimmt ist, wobei der Transfer der Daten zwischen dem Terminal und dem stationären Satelliten mit Hilfe eines Wiederholungssatelliten (LEO) erfolgt, der derart ausgeführt ist, dass er Daten, die von dem stationären Satelliten empfangen werden, zu dem Terminal wiederholt, und dass er Daten, die von dem Terminal empfangen werden, zu dem stationären Satelliten wiederholt, **dadurch gekennzeichnet, dass** der Wiederholungssatellit (LEO):
- ein selbes Frequenzband für die Wiederholung von Daten zu dem stationären Satelliten (GEO), "aufsteigendes Senden" genannt, und für die Wiederholung von Daten zu dem Terminal (REC), "absteigendes Senden" genannt, verwendet, wobei das Frequenzband eines der Bänder VHF, UHF, L, S, C, X, Ka, Q ist,
- das aufsteigende Senden und das absteigende Senden während unterschiedlicher Zeitintervalle durchführt,
- einen selben Leistungsverstärker (120) für aufsteigendes Senden und für absteigendes Senden verwendet.

12. Verfahren nach Anspruch 11, **dadurch gekennzeichnet, dass** der Wiederholungssatellit (LEO) dasselbe Frequenzband, das für das aufsteigende Senden und das absteigende Senden verwendet wurde, für das Empfangen von zu wiederholenden Daten vom Terminal, "aufsteigendes Empfangen" genannt, und für das Empfangen von zu wiederholenden Daten vom stationären Satelliten, "absteigendes Empfangen" genannt, verwendet.

13. Verfahren nach Anspruch 12, **dadurch gekennzeichnet, dass** der Wiederholungssatellit (LEO) das aufsteigende Senden und das aufsteigende Empfangen zeitmultiplext, und/oder der Wiederholungssatellit (LEO) das absteigende Senden und das absteigende Empfangen zeitmultiplext.

14. Verfahren nach einem der Ansprüche 12 bis 13, **dadurch gekennzeichnet, dass** der Wiederholungssatellit (LEO) ein selbes erstes Unterfrequenzband (F1) des Frequenzbandes für das aufsteigende Empfangen und das aufsteigende Senden verwendet, und ein selbes zweites Unterfrequenzband (F2) des Frequenzbandes für das absteigende Empfangen und das absteigende Senden verwendet.

## Claims

1. A payload (10) for a repeater satellite (LEO) in a telecommunication system, said repeater satellite being intended to be put into traveling orbit above the surface of Earth, and the payload (10) being configured to repeat data received from a stationary satellite (GEO) above the surface of Earth to a terminal (REC) that is substantially on the surface of Earth, and to repeat data received from the terminal to the stationary satellite, **characterized in that** said payload (10) comprises at least one power amplifier (120) and is furthermore configured to:
- use a same frequency band for repeating data to the stationary satellite (GEO), referred to as "uplink transmission", and for repeating data to the terminal (REC), referred to as "downlink transmission", said frequency band being any one of the bands VHF, UHF, L, S, C, X, Ka, Q,
- perform the uplink transmissions and the downlink transmissions during different intervals of time,
- use said power amplifier both for uplink transmissions and for downlink transmissions.

2. The payload (10) according to claim 1, **characterized in that** it comprises:
- at least one uplink transmission antenna (101),
- at least one downlink transmission antenna (111),
- means (121) for routing a signal at the output of the power amplifier (120), representative of data to be repeated, either to said uplink transmission antenna or to said downlink transmission antenna.

3. The payload (10) according to claim 2, **characterized in that** it comprises means (122) for multiplexing, at the input of the power amplifier (120), uplink transmission signals and downlink transmission signals.

4. The payload (10) according to one of the preceding, **characterized in that** it comprises:
- a plurality of downlink transmission antennas (111),
- means (114) for routing a signal at the output of the power amplifier (120), representative of data to be repeated, to any one of said downlink transmission antennas.

5. The payload (10) according to one of the preceding claims, **characterized in that** it is configured to use the same frequency band, which is used for the uplink transmissions and the downlink transmissions, for receiving data to be repeated from the terminal (REC), referred to as "uplink reception", and for receiving data to be repeated from the stationary satellite (GEO), referred to as "downlink reception".

6. The payload (10) according to claim 5, **characterized in that** it comprises a plurality of uplink reception antennas (111), said payload being configured to receive simultaneously on each of said uplink reception antennas.

7. The payload (10) according to one of claims 5 to 6, **characterized in that** it is configured to time multiplex the uplink transmissions and the uplink receptions, and/or to time multiplex the downlink transmissions and the downlink receptions.

8. The payload (10) according to one of claims 5 to 7, **characterized in that** it is configured to use a same first frequency sub-band (F1) of the frequency band for the uplink receptions and the uplink transmissions, and to use a same second frequency sub-band (F2) of the frequency band for the downlink receptions and the downlink transmissions.

9. The payload (10) according to one of claims 5 to 8, **characterized in that** it is configured to perform the uplink receptions simultaneously with the downlink transmissions, and to perform the downlink receptions simultaneously with the uplink transmissions.

10. A telecommunication system that is intended to transfer data between at least one terminal (REC), situated substantially on the surface of Earth, and at least one stationary satellite (GEO) above the surface of Earth, **characterized in that** it comprises one or more signal repeater satellites (LEO), said repeater satellites traveling above the surface of Earth and comprising a payload (10) according to any one of the preceding claims.

11. A telecommunication method that is intended to transfer data between a terminal (REC), situated substantially on the surface of Earth, and a stationary satellite (GEO) above the surface of Earth, the data transfer between said terminal and said stationary satellite being performed by means of a repeater satellite (LEO) configured to repeat data received from said stationary satellite to said terminal and to repeat data received from said terminal to said stationary satellite, **characterized in that** the repeater satellite (LEO):
- uses a same frequency band for repeating data to the stationary satellite (GEO), referred to as "uplink transmission", and for repeating data to the terminal (REC), referred to as "downlink transmission", said frequency band being any one of the bands VHF, UHF, L, S, C, X, Ka, Q,
- performs the uplink transmissions and the downlink transmissions during different intervals of time,
- uses a same power amplifier (120) for the uplink transmissions and for the downlink transmissions.

12. The method according to claim 11, **characterized in that** the repeater satellite (LEO) uses the same frequency band, which is used for the uplink transmissions and the downlink transmissions, for receiving data to be repeated from the terminal, referred to as "uplink reception", and for receiving data to be repeated from the stationary satellite, referred to as "downlink reception".

13. The method according to claim 12, **characterized in that** the repeater satellite (LEO) time multiplexes the uplink transmissions and the uplink receptions, and/or said repeater satellite (LEO) time multiplexes the downlink transmissions and the downlink receptions.

14. The method according to one of claims 12 to 13, **characterized in that** the repeater satellite (LEO) uses a same first frequency sub-band (F1) of the frequency band for the uplink receptions and the uplink transmissions, and uses a same second frequency sub-band (F2) of the frequency band for the downlink receptions and the downlink transmissions.
